# EUROPÄISCHE PATENTSCHRIFT

(11) **EP 0 995 892 B1**
(45) Veröffentlichungstag und Bekanntmachung des Hinweises auf die Patenterteilung: **09.04.2003**
(21) Anmeldenummer: 98119969.8
(22) Anmeldetag: 22.10.1998
(51) Int. Cl.: F02D 41/14, F01N 3/20

(54) **Verfahren zur Überwachung der Laufruheregelung eines Verbrennungsmotors**
Method for monitoring the smooth running control of an internal combustion engine
Méthode pour surveiller la commande de régularité de fonctionnement d'un moteur à combustion interne

(43) Veröffentlichungstag der Anmeldung: 26.04.2000
(73) Patentinhaber: Ford Global Technologies, Inc., A subsidiary of Ford Motor Company, Dearborn, Michigan 48126 (US)
(72) Erfinder: Phlips, Patrick, 50858 Köln (DE); Grieser, Klemens, 40764 Langenfeld (DE); Himmelsbach, Johann, 51789 Lindlar (DE); Dickers, Guido, 41068 Mönchengladbach (DE)
(74) Vertreter: Drömer, Hans-Carsten, Dipl.-Ing.

(56) Entgegenhaltungen:
- EP-A- 0 236 659
- US-A- 5 129 228
- US-A- 5 735 246
- US-A- 5 743 083
- PATENT ABSTRACTS OF JAPAN vol. 016, no. 474 (M-1319), 2. Oktober 1992 & JP 04 171231 A (MITSUBISHI MOTORS CORP), 18. Juni 1992
- PATENT ABSTRACTS OF JAPAN vol. 009, no. 250 (P-394), 8. Oktober 1985 & JP 60 102538 A (NIPPON DENSO KK), 6. Juni 1985

## Beschreibung

Die Erfindung betrifft ein Verfahren zur Überwachung der Laufruheregelung eines Mehrzylinder-Verbrennungsmotors abhängig von einem Meßwert des Katalysatorzustandes.

Derartige Verfahren finden insbesondere bei Verbrennungsmotoren, die mit einem mageren Luft-/Kraftstoffgemisch (air/fuel ratio, AFR) arbeiten (lean burn engines) Verwendung. Im Magerbetrieb kann die Entstehung von Stickoxiden (NOₓ) nämlich dadurch verringert werden, daß der Motor mit möglichst magerem Gemisch arbeitet. Einer Abmagerung des Luft-/Kraftstoffgemisches sind aber Grenzen gesetzt, da es bei zu magerem Gemisch zu Aussetzern kommen kann, die zu einem unruhigen Motorlauf und im Extremfall zu einem Ausgehen des Motors führen können.

Deshalb wird im Magerbetrieb angestrebt, den Motor mit einem möglichst hohem Luft-/Kraftstoffverhältnis (magerem Gemisch) zu betreiben, wobei allerdings vom Fahrer wahrnehmbare Laufunruhen vermieden werden sollen. Der Motor soll somit zur Reduzierung von Stickoxidrohemissionen möglichst nahe an einer Laufunruhegrenze betrieben werden. Das zum Erreichen dieses Zieles erforderliche Luft-/Kraftstoffverhältnis kann im voraus nur sehr ungenau bestimmt werden, da das Erreichen der Laufunruhegrenze von einer Vielzahl von Parametern, die teilweise langzeitigen oder kurzfristigen Driften unterworfen sind, abhängt, wie z.B. den aktuellen Motorbetriebsparametern, den Geometrieeigenschaften der Verbrennungskammern, der Güte der Gemischaufbereitung, dem Zustand der Zündanlage usw.. Bei Verwendung eines im voraus vorgegebenen Luft-/Kraftstoffverhältnisses muß der Motor mit einem relativ großen Sicherheitsabstand zu einem der Laufunruhegrenze entsprechenden Luft-/Kraftstoffverhältnis betrieben werden, was die Stickoxidrohemissionen negativ beeinflußt.

Es ist grundsätzlich bekannt, die Laufunruhe eines Verbrennungsmotors zu messen. Zur Gewinnung eines Meßwertes für die Laufunruhe wertet man bevorzugt die Bewegung der Kurbelwelle mittels eines Kurbelwellenwinkelsensors aus. Eine zunehmende Laufunruhe führt zu einem unruhigeren Lauf der Kurbelwelle, so daß mittels statistischer Verfahren (z.B. Vergleich der aktuellen Winkelgeschwindigkeit mit einem Durchschnittswert) ein Meßwert, der ein Maß für die Laufunruhe darstellt, bestimmt werden kann.

Das erfindungsgemäße Verfahren zur Überwachung der Laufruheregelung eines Mehrzylinder-Verbrennungsmotors, bei dem die Laufruhe mit wenigstens einer über eine Regeleinrichtung regelbaren Stellgröße zur Beeinflussung des Laufruheverhaltens geregelt wird, ist in Anspruch 1 wiedergegeben.

Im Magerbetrieb an der Laufruhegrenze steigt der Gehalt an Kohlenwasserstoffen (HC) und der Gehalt an Sauerstoff (O2) im "Rohabgas" an. Mit "Rohabgas" ist die Abgaszusammensetzung vor dem Katalysator gemeint. Die Kohlenwasserstoffe und der Sauerstoff reagieren im Katalysator unter Wärmeabgabe. Bei erhöhter Laufunruhe steigt der HC-Gehalt im Rohabgas stark an. Dadurch wird im Katalysator eine erhöhte Wärmemenge freigesetzt. Dies bewirkt eine verstärkte Erwärmung des Katalysators im Bereich des Katalysatorauslasses. Mit geeigneten Sensoren am Katalysatoreinlaß und am Katalysatorauslaß können die entsprechenden Meßsignale, welche ein Maß für die Temperaturen am Ort der Sensoren darstellen, ausgewertet werden, um abhängig von einem aus den Meßsignalen gebildeten Meßwert eine Überwachung der Laufruhe vorzunehmen.

Als Meßwert zur Überwachung der Laufruhe wird bevorzugt die Differenz der Meßsignale am Katalysatoreinlaß und am Katalsytorauslaß gebildet. Die Meßsignale können zuvor geeignet kalibriert worden sein.

Der Meßwert zur Überwachung der Laufruhe wird aus Meßsignalen an den HEGO-Sensoren (Heated Exhaust Gas Oxygen) gebildet. Diese Sensoren haben einen temperaturabhängigen Innenwiderstand, der mit Hilfe einer geeigneten Meß- und Auswerteinrichtung erfaßt werden kann. Bei der verstärkten Wärmeabgabe beim Überschreiten der Laufunruhegrenze ist die entsprechende Temperaturänderung an den HEGO-Sensoren über die Änderung von deren Innenwiderstand ablesbar. Um hieraus einen Meßwert für die Laufruhe zu gewinnen, können die Veränderungen des Innenwiderstandes eines HEGO-Sensors bzw dessen zeitlicher Verlauf verwendet werden, bevorzugt werden jedoch beide HEGO-Sensoren bzw die Änderungen von deren Innenwiderstand zur Bildung des Meßwertes zur Überwachung der Laufunruhe herangezogen. Die Differenz kann mit einem durch Versuche festgelegten Referenzwert verglichen werden.

Es ist erfindungsgemäß vorgesehen, daß der Referenzwert für die Überwachung der Laufruhe mittels eines funktionalen Zusammenhangs (Kennfeldes) abhängig von der Drehzahl und dem Drehmoment des Verbrennungsmotors variiert wird. Das erforderliche Kennfeld wird vorzugsweise mittels geeigneter Versuchsreihen bestimmt.

Die Erfindung wird nachfolgend anhand der Zeichnung beispielhaft erläutert.

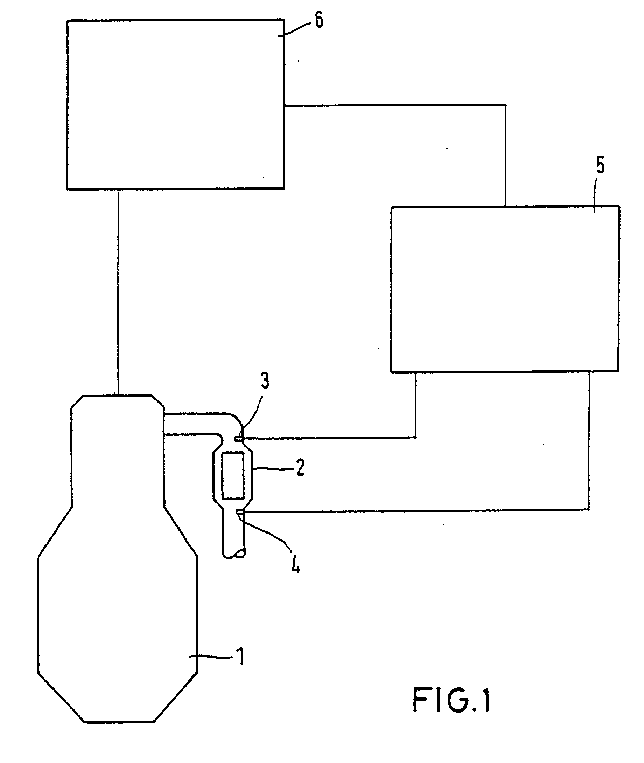

Fig. 1 zeigt schematisch den Aufbau einer geeigneten Vorrichtung zur Durchführung des Verfahrens. An der Brennkraftmaschine 1 ist der Katalysator 2 angebracht, an dem zwei HEGO-Sensoren 3,4 angeordnet sind. Die HEGO-Sensoren sind mit einer Meßwerterfassung und Auswertungseinheit 5 verbunden. In dieser werden neben der Verarbeitung der üblichen Meßsignale der Sensoren auch die Innenwiderstände bestimmt, verarbeitet und mit einem festgelegten Schwellwert verglichen. Daraus wird eine Stellgröße abgeleitet und einem Stellglied 6 zugeführt.

## Patentansprüche

1. Verfahren zur Überwachung der Laufruheregelung eines Mehrzylinder-Verbrennungsmotors, bei dem die Laufruhe mit wenigstens einer über eine Regeleinrichtung regelbaren Stellgröße zur Beeinflussung des Laufruheverhaltens geregelt wird, wobei wenigstens einer Temperatur am Katalysator (2) entsprechende Meßsignale aufgenommen und ausgewertet werden, urid wobei die Auswertung durch Vergleich mit einem Referenzwert der Temperatur für die Überwachung der Laufruhe erfolgt,
**dadurch gekennzeichnet, daß**
der Referenzwert mittels eines funktionalen Zusammenhanges abhängig von der Drehzahl und dem Drehmoment des Verbrennungsmotors variiert wird, daß zwei Temperaturen am Katalysator (2) entsprechende Meßsignale am Katalysatoreinlaß (TE) und am Katalysatorauslaß (TA) aufgenommen werden und daß die Meßsignale aus den Innenwiderständen der Vorhandenen HEGO-Sensoren (3,4) gebildet werden.

2. Verfahren nach Anspruch 1,
**dadurch gekennzeichnet, daß**
die Differenz (TA - TE) der Meßsignale gebildet und mit dem Referenzwert verglichen wird.

3. Verfahren nach Anspruch 1 oder 2,
**dadurch gekennzeichnet, daß**
im Falle eines Überschreitens des Referenzwertes der Magerbetrieb mit Laufruheregelung verlassen und der Motor stöchiometrisch betrieben wird.

## Claims

1. Method for monitoring the regulation of the smoothness of operation of a multi-cylinder internal combustion engine, in which, to influence the smooth running behaviour, smoothness of operation is regulated using at least one manipulated variable that can be regulated by means of a control device, measurement signals corresponding to at least one temperature at the catalytic converter (2) being recorded and evaluated and evaluation being performed by comparison with a reference value for the temperature for monitoring the smoothness of operation, **characterized in that** the reference value is varied by means of a functional relationship as a function of the speed and torque of the internal combustion engine, **in that** two measurement signals at the converter inlet (TE) and at the converter outlet (TA), corresponding to temperatures at the catalytic converter (2), are recorded, and **in that** the measurement signals are formed from the internal resistances of the HEGO sensors present (3, 4).

2. Method according to Claim 1, **characterized in that** the difference (TA - TE) between the measurement signals is formed and compared with the reference value.

3. Method according to Claim 1 or 2, **characterized in that** lean-burn operation with regulation of smoothness of operation is abandoned and the engine is operated stoichiometrically if the reference value is exceeded.

## Revendications

1. Procédé pour surveiller la commande de régularité de fonctionnement d'un moteur à combustion interne multi-cylindres, dans lequel la régularité de fonctionnement est régulée avec au moins une valeur de réglage réglable par le biais d'un dispositif de régulation pour influencer le comportement de régularité de fonctionnement, des signaux de mesure correspondant à au moins une température du catalyseur (2) étant enregistrés et analysés, et l'analyse s'effectuant par comparaison avec une valeur de référence de la température pour la surveillance de la régularité de fonctionnement,
**caractérisé en ce que**
la valeur de référence est variée au moyen d'une relation fonctionnelle en fonction de la vitesse de rotation et du couple du moteur à combustion interne, **en ce que** des signaux de mesure correspondant à deux températures du catalyseur (2) à l'entrée du catalyseur (TE) et à la sortie du catalyseur (TA) sont enregistrés, et **en ce que** les signaux de mesure sont formés à partir des résistances internes des sondes lambda chauffées existantes (3, 4).

2. Procédé selon la revendication 1,
**caractérisé en ce que** la différence (TA - TE) des signaux de mesure est formée et est comparée à la valeur de référence.

3. Procédé selon la revendication 1 ou 2,
**caractérisé en ce que**
dans le cas d'un dépassement de la valeur de référence, le mode de fonctionnement maigre avec commande de régularité de fonctionnement est quitté et le moteur est entraîné de manière stoechiométrique.
